# EUROPEAN PATENT APPLICATION

(11) **EP 1 742 460 A1**
(43) Date of publication of application: **10.01.2007**
(21) Application number: 05013198.6
(22) Date of filing: 18.06.2005
(51) Int. Cl.: H04N 3/233

(54) **Raster distortion correction circuit**

(71) Applicant: TTE Germany GmbH, 78048 Villingen-Schwenningen (DE)
(72) Inventor: Dieterle, Franz, 77761 Schiltach (DE)
(74) Representative: Arnold, Klaus-Peter

(57) **Abstract**

A deflection apparatus with raster distortion correction, comprises a horizontal deflection circuit with a deflection winding, with a S-capacitor (C09), which is coupled in series to the deflecting winding, with at least two further capacitors (C10, C11) and with a switching circuit.

By comparing a first comparison signal with a second comparison signal, the switching circuit selectively connects the at least two further capacitors (C10, C11) in parallel to the S-capacitor (C09) during each trace and retrace interval. By integrating a horizontal flyback signal a replacement signal SR is provided and generates the first comparison signal.

## Description

### BACKGROUND OF THE INVENTION

### FIELD OF THE INVENTION

The present invention is related to a deflection apparatus with raster distortion correction according to the preamble of claim 1. A deflection apparatus is used for cathode ray tubes.

### DESCRIPTION OF THE PRIOR ART

By providing a raster distortion correction a deflection apparatus comprises a horizontal deflection circuit, which includes generating a S-shaped deflection current and a modulation of the current's amplitude, called East-West correction or outer pincushion correction. In many cases additional geometry corrections, like a higher order S-correction with higher frequency components than the line frequency, e.g. a M-character type correction on the S-voltage, an inner pincushion correction and a further inner pincushion correction, e.g. a correction of a 4^{th} order bending of the vertical lines at top and bottom, are necessary. Above all, tubes with deflection angles of about 120 degrees or more need such additional corrections. The invention concerns, in particular, such additional corrections.

A horizontal deflection circuit appropriate for providing additional geometry corrections is known from the US 5,949,201. The US 5,949,201 describes a horizontal deflection circuit with a deflection winding and a first capacitor known as a S-capacitor coupled in series to the deflecting winding.

The horizontal deflection circuit further comprises a second capacitor, which is selectively connected in parallel to the first capacitor during each trace and retrace interval. By comparing a retrace pulse with a vertical scanning period signal a turning-on time width is varied in synchronism with the vertical scanning period. As a result, an effective capacity value of the second capacitor is varied in synchronism with the vertical scanning period.

Philips application note AN99003 describes a further horizontal deflection circuit appropriate for providing additional geometry corrections with a deflection winding and a S-capacitor coupled in series to the deflecting winding. This horizontal deflection circuit further comprises a second capacitor and a switching circuit, which selectively connects the second capacitor in parallel to the S-capacitor each trace and retrace interval. The ON and OFF times are provided by comparing an S-voltage, namely a tapped parabolic waveform on the S-capacitor, with a constant reference DC-voltage. By switching the second capacitor in parallel to the S-capacitor a M-character type error and an inner pincushion error can be corrected.

If a better approximation of the S-correction waveform in respect to the needs of the picture tube is necessary, a further switched capacitor could be desired. Using the S-voltage as a comparison signal may result in an instability of the circuit due to a positive feedback. The stability problem appears when two or more switched capacitors are used. In addition, comparing an S-voltage with a constant reference DC-voltage makes it necessary to align the switching point. The alignment has to be done in an iterative way.

### Summary of the invention

It is therefore desirable to develop a deflection apparatus with raster distortion correction according to the preamble of claim 1, which enables a selective connection of at least two capacitors in parallel to the S-capacitor with less stability problems and less alignment problems. The selectively connected capacitors, i.e. the switched capacitors, should be provided for additional geometry corrections.

According to the invention this can be achieved by the features of claim 1. By integrating horizontal flyback pulses a replacement signal SR for the S-voltage is provided and generates the first comparison signal. The horizontal flyback pulse signal is not depending on the S-voltage in the deflection circuit and is not influenced by a modulation of the horizontal picture amplitude. As a result, there are no stability problems due to a feedback. The additional corrections can be optimised when the horizontal deflection circuit comprises two or more further switched capacitors with different switching points for the switched capacitors.

Advantageous developments of the invention are specified in the dependent claims.

A peak value signal SP of the replacement signal SR is provided and generates the second comparison signal. For instance, by using a divider, the DC-level of the peak value signal SP can be variable provided. Different switching points can be achieved due to different divider values for the peak value signal SP. The comparison of the replacement signal SR and its peak value signal SP cannot be influenced by changes due to component tolerances. No alignment is necessary. None of the two comparison signals is modulated with a vertical parabola signal from the East/West correction. This comparison enables a higher order S-correction.

In addition, by integrating modulated horizontal flyback pulses a V-parabola signal SV is provided. The V-parabola signal SV also generates the first comparison signal, for instance by adding to the replacement signal SR. The V-parabola signal SV enables an inner pincushion correction, for instance in addition to the above mentioned higher order S-correction.

The modulated horizontal flyback pulses are easily provided between a reference point GND at a lower point of the S-capacitor and a ground point of a diode modulator.

By filtering a part of the V-parabola signal SV a correction signal SC is provided. The correction signal SC also generates the second comparison signal, for instance by adding to the peak value signal SR. This correction signal SC enables a further inner pincushion correction, like the correction of a 4^{th} order bending of the vertical lines at top and bottom, for instance in addition to the above mentioned corrections.

### BRIEF DESCRIPTION OF THE DRAWINGS

The invention will be explained in more detail using one embodiment, which is illustrated in the figures.
It shows:
figure 1 a simplified schematic diagram of a horizontal deflection circuit showing an S-capacitor, a second capacitor, a third capacitor and a switching circuit;
figure 2 a current in the third capacitor and a drain voltage of its switch;
figure 3 a current in the second capacitor and a drain voltage of its switch;
and figure 4 a modulated horizontal flyback pulse and a replacement signal SR.

### DETAILED DESCRIPTION OF AN EMBODIMENT OF THE INVENTION

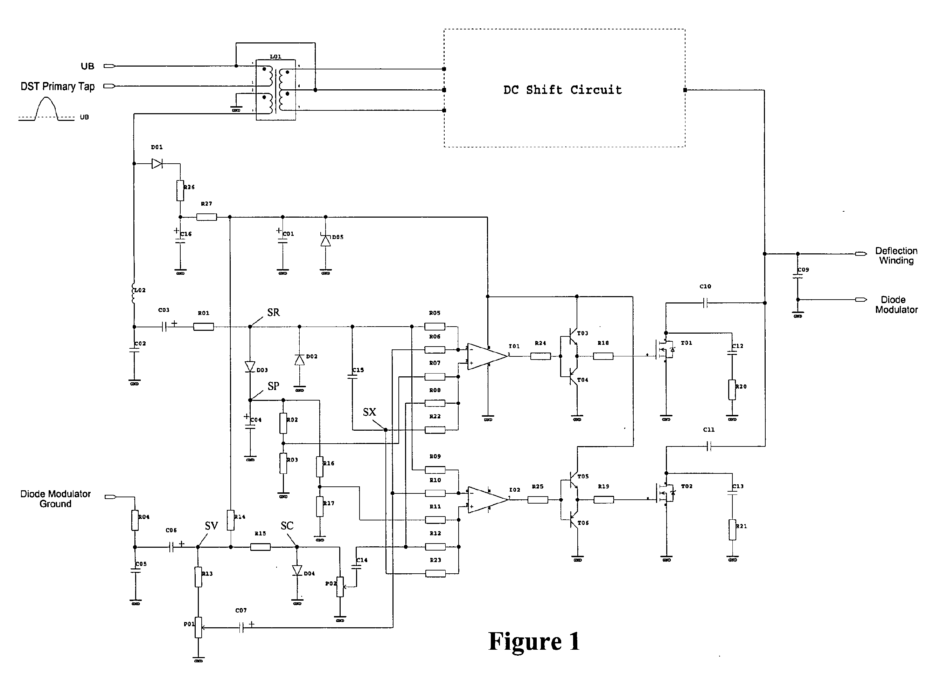

A deflection apparatus with raster distortion correction comprises a horizontal deflection circuit with a deflection winding and an S-capacitor C09, coupled in series to the deflecting winding, which generates an S-shaped deflection current. The horizontal deflection circuit further comprises a diode modulator and an Est/West-correction circuit for providing an outer pincushion correction. This part of the horizontal deflection circuit is well known and not pictured in figure 1 except for the S-capacitor C09.

Figure 1 shows a switching circuit of the horizontal deflection circuit with the S-capacitor C09, two further switched capacitors C10, C11 and a switching circuit with switching means, driving means and comparing means for each further capacitor C10, C11.

The comparing means of the second capacitor C10 is formed by an operational amplifier I01. The operational amplifier I01 works as a comparator and compares a first comparison signal at its inverting input with a second comparison signal at its non-inverting input.

The driving means of the second capacitor C10 is formed by a push-pull driver with two transistors T03 and T04 and by two resistors R24 and R16. The resistor R24 is coupled between an output of the operational amplifier I01 and a point between the bases of the transistors T03 and T04. The resistor R18 is connected with a point between the emitters of the transistors T03 and T04 and with the switching means. The push-pull driver increases the currents of the output signal of the operational amplifier I01 for a fast enough gate drive of T01. Alternatively, the driving means can be formed by a resistor only.

The switching means comprises a switch T01, which is a MOSFET, and filtering RC-means with a resistor R20 and a capacitor C12. The resistor R18 is connected with the gate of the switch T01. The output signal of the operational amplifier I01 drives the switch T01 through the push-pull driver.

The switch T01 is coupled in series with the second capacitor C10 and both are coupled in parallel with the S-capacitor C09. By driving the switch T01 corresponding to the output signal of the amplifier I01 the second capacitor C10 is selectively connected to the S-capacitor C09. In particular, the second capacitor C10 is connected in parallel to the S-capacitor C09, when the switch T01 is switched on and it is disconnected when the switch T01 is switched off.

The switching, driving and comparing means of the third capacitor C11 correspond to that of the second capacitor C10. The comparing means is formed by an operational amplifier I02. The driving means is formed by a push-pull driver with two transistors T05 and T06 and by two resistors R25 and R19. The switching means comprises a switch T02, which is a MOSFET, and filtering RC-means with a resistor R21 and a capacitor C13.

The switching circuit comprises input means for a horizontal flyback signal, a replacement signal circuit for generating a replacement signal SR from the horizontal flyback signal and a peak signal circuit for generating a peak value signal SP from the peak-to-peak amplitude of the replacement signal SR.

The input means comprises a transformer L01 with a high primary inductance, which provides a galvanic insulation. The transformer L01 works in forward mode. A first primary winding is coupled between a regulated supply voltage Ub and some primary windings of a line transformer of the non-shown part of the horizontal deflection circuit. The pulses of this horizontal flyback signal are not influenced by the vertical modulation parabola of the East-West correction. A second primary winding, which delivers the transformed horizontal flyback signal, is coupled to a reference point GND of the diode modulator. This reference point GND is located at the lower end of the S-capacitor. It is also located between the two diodes of the diode modulator.

The secondary windings of the transformer L01 can be coupled to a DC-shift circuit. A DC-shift current generated in this circuit can be used to add a DC component to the deflection current. Alternatively, the transformer L01 can be connected to an auxiliary output of the line transformer. A floating winding of the above mentioned line transformer can be used instead for the transformer L01.

The replacement signal SR circuit comprises a winding L02 and a capacitor C02, which integrate the pulses of the horizontal flyback signal to a half sine wave shaped signal, i.e. to the replacement signal SR. The peak-to-peak amplitude of this signal is lower than the supply voltage of the switching circuit, which is generated by later mentioned supply means. The current in the winding L02 and the capacitor C02 has a sawtooth shape. The replacement signal circuit further comprises a capacitor C03, a resistor R01 and a diode D02 for adjusting the level of the replacement signal SR. The diode D02 clamps the replacement signal SR to the reference point GND.

The replacement signal circuit is connected with the inverting input of the operational amplifier I01 via an input-resistor R05 and with the inverting input of the operational amplifier 102 via an input-resistor R09. As a result the first comparison signal is generated by the replacement signal SR.

The peak signal circuit for generating the peak value signal SP from the peak-to-peak amplitude of replacement signal SR comprises a diode D03 for rectifying the replacement signal SR and a capacitor C04 for storing the peak voltage. The peak signal circuit further comprises a divider for each switched capacitor C10, C11. The divider for the second capacitor C10 is formed by the two resistors R02 and R03 and the divider for the third capacitor is formed by the two resistors R16 and R17.

The peak signal circuit is connected with the non-inverting input of the operational amplifier IO1 via an input-resistor R07 and with the non-inverting input of the operational amplifier 102 via an input-resistor R11. As a result, the second comparison signal is generated by the peak value signal SP. In particular, the second comparison signal is generated by the different divider values of the peak value signal SP for the two switched capacitors C10, C11.

The switching circuit further comprises a V-parabola signal circuit, which by integrating modulated horizontal flyback pulses generates a V-parabola signal SV. The modulated horizontal flyback pulses are provided between the reference point GND and a ground point of the diode modulator.

The V-parabola signal circuit comprises RC-means with a resistor R04 and a capacitor C05, which is coupled between the two above mentioned points. The RC-means integrates the delivered modulated horizontal flyback pulses and generates the V-parabola signal SV, which corresponds to the initial vertical parabola signal of the East/West-correction.

The V-parabola signal circuit further comprises a capacitor C06, which decouples the negative DC voltage of the V-parabola signal SV corresponding to the picture width. This makes the signal SV independent of an alignment of the horizontal amplitude of the deflection current. The V-parabola signal circuit further comprises a divider with a resistor R13 and a potentiometer P01 and a capacitor C07. The capacitor C07 decouples the DC voltage. As a result, the modulation of the switching points with the V-parabola signal SV is obtained without influence to the static switching points of the S-capacitor C09.

The V-parabola signal circuit is connected with the inverting input of the operational amplifier I01 via an input resistor R06 and with the inverting input of the operational amplifier I02 via an input resistor R10. As a result, the first comparison signal is further generated by the V-parabola signal SV.

The switching circuit further comprises a correction signal circuit, which by filtering a part of the V-parabola signal SV generates a vertical correction signal SC. The correction signal circuit is provided with a resistor R15 and a diode D04. The DC voltage of the signal SV is adjusted with the value of resistor R14. The adjusted V-parabola signal SV is clipped on the diode D04. The diode D04 filters the negative part of the pulses of the V-parabola signal SV and generates the correction signal SC. The correction signal circuit further comprises a divider with a potentiometer P02 and a capacitor C14. The capacitor C14 decouples the DC voltage.

The correction signal circuit is connected with the non-inverting input of the operational amplifier I01 via an input resistor R08 and with the non-inverting input of the operational amplifier I02 via an input resistor R12. As a result, the second comparison signal is further generated by the correction signal SC.

The operational amplifier I01 works as a comparator, which compares the first comparison signal at the inverting input with the second comparison signal at the non-inverting input. The first comparison signal is generated by the replacement signal SR and the vertical modulation signal SV, i.e. by an addition of these two signals SR and SV. The second comparison signal is correspondingly generated by an addition of the peak value signal SP and the correction signal SC.

The operational amplifier I02 works in the same manner as the operational amplifier I01 does.

The switching circuit further comprises supply means, which generates a supply voltage from the non modulated flyback pulses, for the operational amplifiers I01 I02 and the transistors T03, T04, T05, T06. The supply means is provided with a diode D01, a resistor R26 and a capacitor C16, which rectify the horizontal flyback pulses. The supply means is further provided with a zener diode D05, which stabilizes the voltage and a resistor R27, which limits the current.

The replacement signal circuit can optionally comprise compensation means for compensating an asymmetry of the replacement signal SR. The compensation means can be formed by a capacitor C15, which generates a compensation signal SX by differentiation of the signal SR. This compensation signal SX can be delivered to the operational amplifier I01 via an input-resistor R22 and to the operational amplifier I02 via an input-resistor R23.

In operation, by comparing the first comparison signal with the second comparison signal, the switching circuit selectively connects the second capacitor C10 and the third capacitor C11 in parallel to the S-capacitor C09 during each trace and retrace interval.

In particular, starting from the beginning of the trace interval all capacitors C09, C10 and C11 are connected and active. The switches T01 and T02 are switched on. The active capacitance is the sum of the capacitances of the three capacitors C09, C10 and C11.

After a certain time a switch-off point of the switch T02 is reached and the switch T02 is switched off. The capacitor C11 is disconnected. The remaining active capacitance is lowered. The same amount of deflection current flows through a lower active capacitance. As a result, the change of the deflection voltage gets steeper.

After a further certain time a switch-off point of the switch T01 is reached and the switch T01 is switched off. The capacitor C10 is disconnected. Corresponding to the switching-off of the second capacitor C10 the active capacitance is lowered and the change of the deflection voltage gets still steeper. This happens around the centre of the picture where the highest change of the deflection voltage is needed.

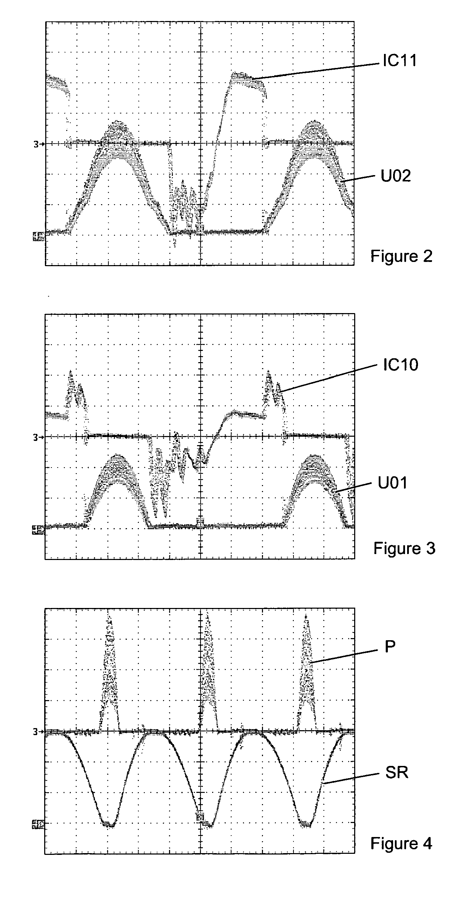

Symmetrically to the centre of the picture, first a conducting point of the switch T01 is reached and than a conducting point of the switch T02 is reached. The conducting points are reached, when the internal diode of the transistors of the switches T01, T02 becomes conductive. The switch-on by the gate drive of the transistors happens later during the conducting time of the internal diodes. Figure 2 and figure 3 show the conducting points with the help of the drain voltage U02 and U01 of the switches T02 and T01. The figures 2,3 also show the current IC11 and IC10 at the corresponding capacitors C11 and C10.

The switch-off points of the switches T01, T02 are determined by the output signals from the operational amplifiers I01, I02. The switch-on points of the switches T01, T02 are chosen, when the internal diodes of the MOSFETs take over the negative deflection current from the corresponding capacitors C10, C11. Due to a lower capacitance of the capacitor C10 the switch-on point of the switch T01 is reached earlier than the switch-on point of the switch T02.

The important switching points are the switch-off points. The switch-on points only need to be chosen during the time where the internal diodes are conductive.

Figure 4 shows a signal P with the horizontal modulated pulses and the replacement signal SR. The amplitude of the replacement signal SR is constant. It does not change with a vertical parabola signal of the East/West correction and it also does not change with further correction signals.

## Claims

1. A deflection apparatus with raster distortion correction, comprising:
a horizontal deflection circuit
with a deflection winding, with a S-capacitor (C09) coupled in series to the deflecting winding, and
with at least two further capacitors (C10, C11) and with a switching circuit,
which by comparing a first comparison signal with a second comparison signal, selectively connects the at least two further capacitors (C10, C11) in parallel to the S-capacitor (C09) during each trace and retrace interval,
**characterised in that**
by integrating a horizontal flyback signal a replacement signal SR is provided and generates the first comparison signal.

2. A deflection apparatus with raster distortion correction according to claim 1, **characterised in that** a peak value signal SP of the replacement signal SR is provided and generates the second comparison signal.

3. A deflection apparatus with raster distortion correction according to claim 1 or 2, **characterised in that**
by integrating modulated horizontal flyback pulses a V-parabola signal SV is provided and also generates the first comparison signal.

4. A deflection apparatus with raster distortion correction according to one of the claims 1 to 3, **characterised in that** the modulated horizontal flyback pulses are provided between a reference point GND at a lower point of the S-capacitor (C09) and a ground point of a diode modulator.

5. A deflection apparatus with raster distortion correction according to one of the claims 1 to 4, **characterised in that** by filtering a part of the V-parabola signal SV a correction signal SC is provided and also generates the second comparison signal.
